# EUROPEAN PATENT APPLICATION

(11) **EP 1 977 889 A2**
(43) Date of publication of application: **08.10.2008**
(21) Application number: 07020213.0
(22) Date of filing: 16.10.2007
(51) Int. Cl.: B32B 37/12, B32B 37/22

(54) **Batch method for coupling flexible-graphite laminated plates to at least a plastic film**

(30) Priority: 02.04.2007 IT MI20070672
(71) Applicant: F.M.I. S.P.A., 25100 Brescia (IT)
(72) Inventor: Rossi, Franco, 25100 Brescia (IT)
(74) Representative: Cicogna, Franco

(57) **Abstract**

The present invention relates to a batch method for coupling flexible-graphite laminated plates to at least a plastic film, comprising the steps of providing a flexible-graphite laminated plate, supplying in a discontinuous manner the plates to a calender for applying at least a plastic film supporting an adhesive layer, calendering at an adhesive melting temperature, and further calendering at a lower temperature to stabilize the thus obtained composite material.

## Description

### BACKGROUND OF THE INVENTION

The present invention relates to a batch method for coupling flexible-graphite laminated plates to at least a plastic film.

Methods for coupling a flexible-graphite plate to one or two thermoplastic film layers are already commercially available.

The above mentioned prior methods provide to continuously supply a graphite strip together with plastic strips which may be coupled either to one or to the two faces of the graphite strip.

The coupling is herein performed by providing a localized melting of the plastic film, to cause the latter to be anchored on the flexible-graphite supporting strip.

The above mentioned approach, however, does not allow to make large size coupled laminate materials, and, moreover, the connection of the plastic material to the graphite layer is frequently unsatisfactory.

### SUMMARY OF THE INVENTION

Accordingly, the aim of the present invention is to overcome the above mentioned drawbacks, by providing a discontinuous or batch method for coupling flexible-graphite laminated plates to at least a plastic film, allowing to make very large size plates, while providing a monolithic and stable construction.

Within the scope of the above mentioned aim, a main object of the invention is to provide such a method allowing to perform a stable and safe anchoring of the plastic film on the face of the flexible-graphite laminate material, without any risk of causing surface variations or gaps.

Another object of the present invention is to provide such a discontinuous or batch method which, owing to its specifically designed features, is very reliable and safe in operation.

Yet another object of the present invention is to provide such a method which can be easily carried out by using easily commercially available elements and materials.

According to one aspect of the present invention, the above mentioned aim and objects, as well as yet other objects, which will become more apparent hereinafter, are achieved by a method for coupling flexible-graphite laminated plates to at least a plastic film, characterized in that said method comprises the step of providing a flexible-graphite laminate plate, supplying in a discontinuous manner said plate to a calender for applying at least a plastic film supporting an adhesive layer, calendering at an adhesive melting temperature, and further calendering at a lower temperature to stabilize the obtained composite material.

### BRIEF DESCRIPTION OF THE DRAWINGS

Further characteristics and advantages of the present invention will become more apparent hereinafter from the following disclosure of a preferred, though not exclusive, embodiment of a batch or discontinuous method for coupling flexible-graphite laminated plates to at least a plastic film, which is illustrated, by way of an indicative, but not limitative example, in the accompanying drawings, where:

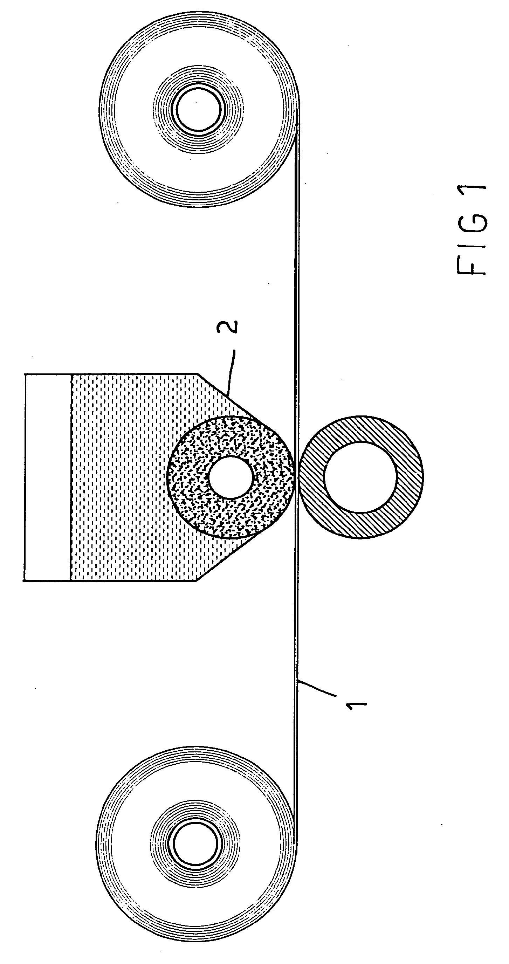

Figure 1 shows a method step for applying an adhesive layer to a plastic film;

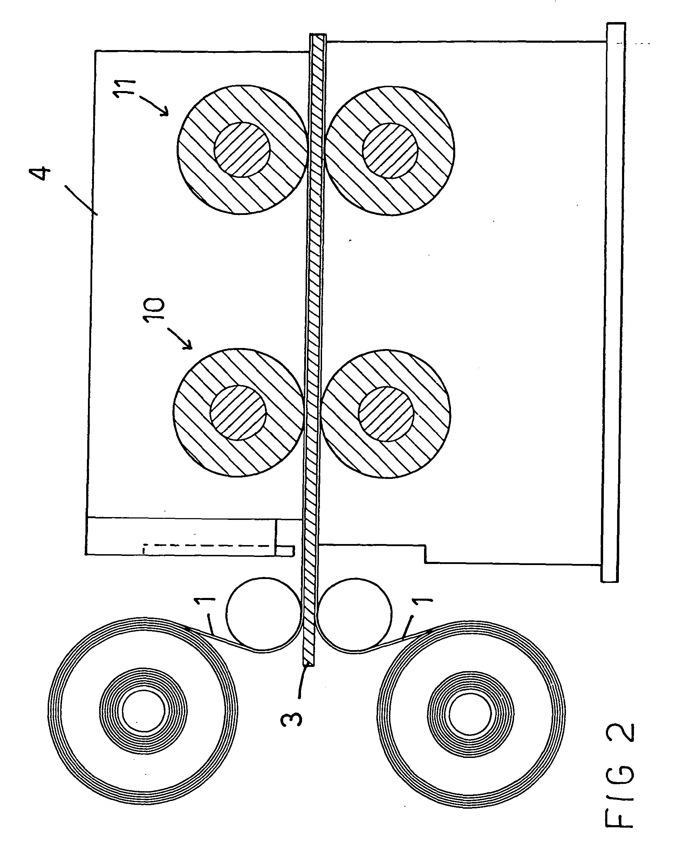

Figure 2 shows a further operating step for applying two plastic films to a flexible-graphite plate; and

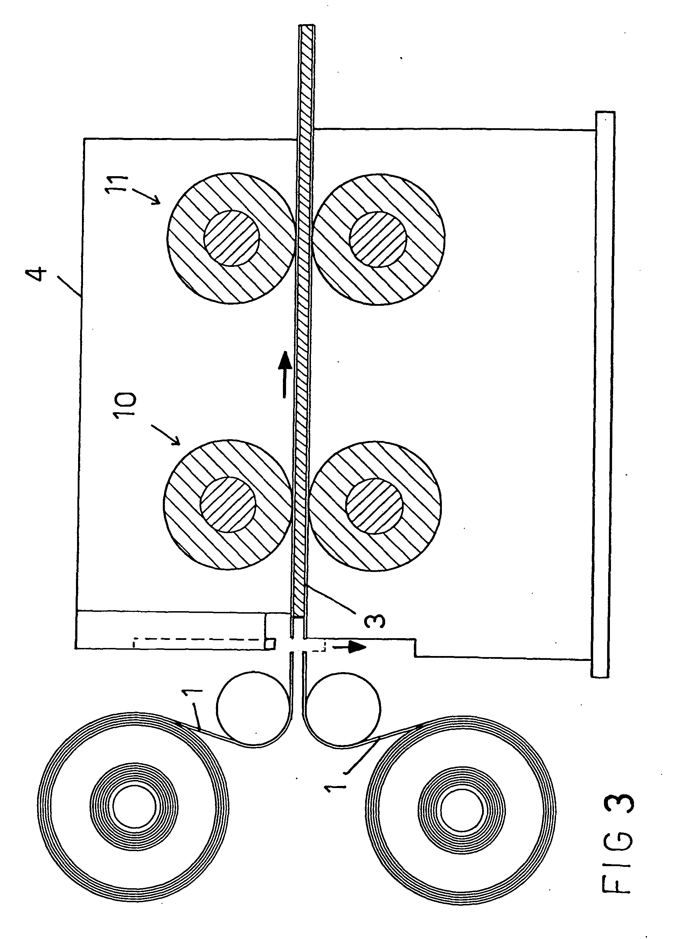

Figure 3 shows a further operating step of cutting through the plastic film at the end of a passage of the plate.

### DESCRIPTION OF THE PREFERRED EMBODIMENTS

With reference to the number references of the above mentioned figures, the method for coupling flexible-graphite laminate plates to at least a plastic film, according to the present invention, comprises a preliminarily step in which a plastic film, generally indicated by the reference number 1, is applied by spreading or coating, through an applying device 2, specifically designed for applying an adhesive layer to be subjected to a first hot calendering processing.

After having set the plastic films to be applied, which can be provided as a single plastic film or as two plastic films, the subject method further provides a step of introducing or supplying, in a discontinuous manner, a plate 3, made of a foamed flexible-graphite laminate, having a density preferably from 0.7 to 1.45 g/cm³, to a calender 4, having a first calendering assembly 10 providing a heating to a temperature from 60°C to 140°C, thereby providing a localized melting of the coated resins or plastic materials.

Thereby is herein obtained a first hot coupling of layered materials, with a connection of the foamed flexible graphite layer 3 to one or two thermoplastic films 1.

After having carried out the first hot coupling through the first hot calendering assembly, the thus obtained composite material is subject or supplied to a second calendering assembly 11, operating at a less temperature, which provides a further stabilizing pressure action on the composite material which is being cooled.

Thus, a layered material is obtained, which can be cut through or trimmed, thereby providing any desired sized product, even of a comparatively large size.

Thus, by the above disclosed method, it is possible to provide large size flexible graphite plates, which may have a size of 2000 x 3000 mm.

From the above disclosure it should be apparent that the invention fully achieves the intended aim and objects.

In fact, the invention provides a discontinuous or batch method allowing to provide an optimum coupling of thermoplastic films to a graphite laminate plate or material.

The invention, as disclosed, is susceptible to several modifications and variations, all of which will come within the scope of the invention.

Moreover, all the constructional details can be replaced by other technically equivalent elements.

In practicing the invention, the used materials, as well as the contingent size and shapes, can be any, depending on requirements.

In particular, the flexible-graphite plate can comprise only graphite or it can also be reinforced by an inner metal grid or net.

## Claims

1. A method for coupling a flexible-graphite laminated plate to at least a plastic film, **characterized in that** said method comprises the step of providing a flexible-graphite laminate plate, supplying in a discontinuous manner said flexible-graphite laminated plate to a calender for applying at least a plastic film supporting an adhesive layer, calendering at an adhesive melting temperature, and further calendering at a less temperature for stabilizing the thus obtained composite material.

2. A method according to the preceding claim, **characterized in that** in said method said plastic film is subjected to a hot calendering step to spread adhesive resins on said plastic film.

3. A method, according to claim 2, **characterized in that** said hot calendering of said plastic film is carried out at a temperature form 60°C to 140°C.

4. A method according to claim 1, **characterized in that** said flexible-graphite laminated plate has a density from 0.7 to 1.45 g/cm³.

5. A method according to claim 1, **characterized in that** said plastic film is a thermoplastic film having a thickness from 10 to 300 micrometers.

6. A method according to claim 1, **characterized in that** said method allows to make flexible-graphite plates having a size up to 2000 x 3000 mm.
